(19)

**Europäisches Patentamt**
**European Patent Office**
**Office européen des brevets**

(11) **EP 4 482 058 A1**

(12) **EUROPEAN PATENT APPLICATION**
published in accordance with Art. 153(4) EPC

(43) Date of publication:
**25.12.2024 Bulletin 2024/52**

(21) Application number: **22925967.6**

(22) Date of filing: **14.02.2022**

(51) International Patent Classification (IPC):
$H04B\ 10/2507^{(2013.01)}$      $H04B\ 3/04^{(2006.01)}$
$H04B\ 10/61^{(2013.01)}$

(52) Cooperative Patent Classification (CPC):
**H04B 3/04; H04B 10/2507; H04B 10/61**

(86) International application number:
**PCT/JP2022/005581**

(87) International publication number:
**WO 2023/152947 (17.08.2023 Gazette 2023/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NEC Corporation
108-8001 Tokyo (JP)**

(72) Inventor: **ARIKAWA Manabu
Tokyo 108-8001 (JP)**

(74) Representative: **Betten & Resch
Patent- und Rechtsanwälte PartGmbB
Maximiliansplatz 14
80333 München (DE)**

(54) **COMMUNICATION SYSTEM, RECEIVER, EQUALIZATION SIGNAL-PROCESSING CIRCUIT, METHOD, AND COMPUTER READABLE MEDIUM**

(57)      Compensating for various pieces of distortion can be achieved while preventing an increase in calculation amount. A receiving circuit (21) coherent-receives a signal being transmitted from a transmitter via a transmission path. An equalization signal processing circuit (22) performs equalization signal processing with respect to the reception signal being coherent-received. A filter group (23) includes a plurality of filters (24) being connected in series along a signal path of the reception signal. A coefficient updating means (25) adaptively controls filter coefficients of at least some filters of the plurality of filters (24), by using an error back propagation method. Among the plurality of filters (24), at least some of intermediate filters convolve the filter coefficients with respect to an input signal vector, and output a calculation result of the convolution and a calculation result of the convolution that is acquired by calculation at a previous time, to a filter in a following stage.

Fig. 4

**Description**

**Technical Field**

The present disclosure relates to a communication system, a receiver, an equalization signal processing circuit, an equalization signal processing method, and a computer readable medium.

**Background Art**

In order to achieve high spectral utilization efficiency in optical fiber communication, multi-level modulation such as high-order quadrature amplitude modulation (QAM) is adopted. Since introduction of coherent reception technology, it has become possible to perform flexible equalization signal processing on a receiver side by digital signal processing, such as by collectively compensating for chromatic dispersion accumulated in an optical fiber transmission path at the receiver side. Generally, however, a high-order multi-level modulation signal is susceptible to distortion. For this reason, distortion caused by imperfection of a component in a transceiver or the like is becoming a new bottleneck in promoting high multi-level.

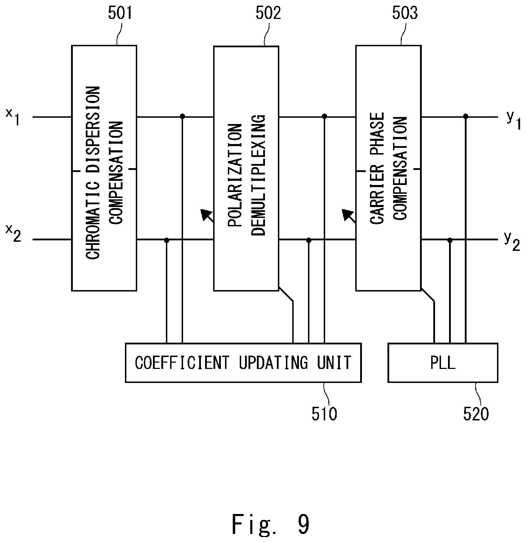

As a related art, Non Patent Literature 1 discloses receiver side equalization digital signal processing that performs equalization of a coherent-received QAM signal. Fig. 9 illustrates an example of the receiver side equalization digital signal processing described in Non Patent Literature 1. The equalization digital signal processing includes a chromatic dispersion compensation 501, a polarization demultiplexing 502, and a carrier phase compensation 503. It is assumed that reception signals of each of X/Y polarization being coherent-received by a receiver are $x_1$ and $x_2$. Assuming that an in-phase component (I) and a quadrature component (Q) of each of polarization are $x_{jI}$ and $x_{jQ}$, the reception signal is represented by $x_j=x_{jI}+ix_{jQ}$.

The chromatic dispersion compensation 501 compensates for chromatic dispersion occurring when an optical signal propagates through an optical fiber. The chromatic dispersion compensation 501 includes a static filter being independent of each polarization. A coefficient of the static filter included in the chromatic dispersion compensation 501 is determined in such a way as to have an inverse characteristic of chromatic dispersion determined from an accumulated chromatic dispersion amount.

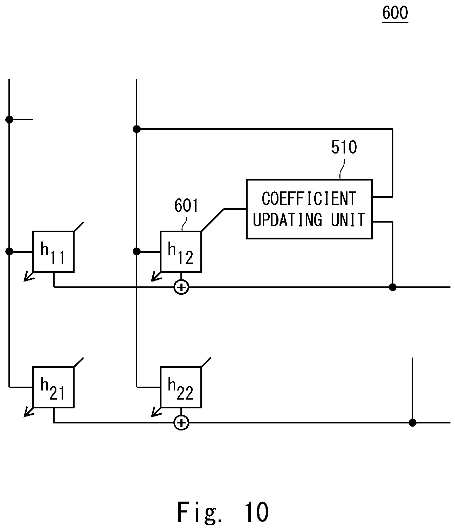

The polarization demultiplexing 502 compensates for a polarization state variation and polarization mode dispersion that occur in an optical signal during propagation in an optical fiber. The polarization demultiplexing 502 includes a multi-input multi-output (MIMO) filter having a cross term between polarized waves. Fig. 10 illustrates a 2×2 MIMO filter used for the polarization demultiplexing 502. A MIMO filter 600 includes, for example, 2×2 finite impulse response (FIR) filters 601. A coefficient of each of the FIR filters 601 is represented by $h_{11}$, $h_{12}$, $h_{21}$, and $h_{22}$.

The polarization state variation occurring in an optical signal during propagation in an optical fiber changes with time depending on an external environment. A coefficient updating unit 510 adaptively controls the coefficient of each FIR filter 601 in such a way as to follow the polarization state variation, based on an input and an output of the 2×2 MIMO filter (polarization demultiplexing 502). In the polarization demultiplexing 502, an algorithm such as a constant modulus algorithm (CMA), a data-aided least mean square (DALMS) algorithm, or a decision-directed least mean square (DDLMS) algorithm is used for coefficient update. These algorithms are algorithms of updating the coefficient in such a way as to minimize average magnitude of a difference between a filter output and a desired state. In these algorithms, a coefficient update amount is calculated by using an input and an output of a filter.

The carrier phase compensation 503 compensates for a frequency offset and a phase offset between a carrier frequency of a transmitted optical signal and local oscillator light on the receiver side. The carrier phase compensation 503 includes a filter that performs phase rotation on the reception signal independently for each polarization. A phase-locked loop (PLL) 520 determines a phase rotation amount of the carrier phase compensation 503. After the carrier phase compensation, signals $y_1$ and $y_2$ of each polarization in which various pieces of distortion are compensated for are acquired.

The receiver side equalization digital signal processing illustrated in Fig. 9 is difficult to compensate for IQ distortion occurring in a transmitter or receiver, such as a mismatch in average signal strength between IQ components (IQ imbalance), a time offset between IQ components (IQ skew), and a quadrature offset between IQ components (IQ phase offset). This is because a complex signal input complex coefficient filter such as the MIMO filter illustrated in Fig. 10 is difficult to provide an independent response for each IQ component. In this sense, the complex signal input complex coefficient filter is referred to as strictly linear (SL).

In order to compensate for the IQ distortion occurring in the transmitter or receiver, a filter capable of handling the IQ components independently is required. Such a filter is, for example, a MIMO filter with a real coefficient, in which a signal of a real number of each IQ component is input and output. For example, when such a filter is applied to a signal of one polarization, a 2×2 MIMO filter with real coefficient in which a signal of a real number of two IQ components is input and output is used. The MIMO filter with the real coefficient is equivalent to a filter in which a complex signal and a complex conjugate thereof are as an input and a complex signal is as an output. These filters are referred to as widely linear (WL).

IQ distortion is generally not order interchangeable with other distortion such as chromatic dispersion. Therefore, as in the configuration in Fig. 9, when an IQ distortion compensation block is provided by distortion compensation for each block, the order is important.

An example of receiver side equalization digital signal processing for equalizing various pieces of distortion in optical fiber communication, including IQ distortion occurring in a transmitter or receiver, is described in Non Patent Literature 2. Fig. 11 illustrates an adaptive multi-layer filter that performs equalization signal processing. The adaptive multi-layer filter includes, in this order, an in-receiver distortion compensation 701, a chromatic dispersion compensation 702, a polarization demultiplexing 703, a carrier phase compensation 704, and an in-transmitter distortion compensation 705.

The in-receiver distortion compensation 701 includes a WL $2 \times 1$ filter for each polarization, i.e., for each of input signals $x_1$ and $x_2$. The chromatic dispersion compensation 702 includes an SL filter for each polarization. The polarization demultiplexing 703 includes a $2 \times 2$ MIMO SL filter. The carrier phase compensation 704 includes an SL filter for each polarization. The in-transmitter distortion compensation 705 includes a WL $2 \times 1$ filter for each polarization.

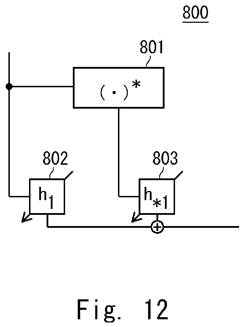

Fig. 12 illustrates a WL $2 \times 1$ filter to be used for the in-receiver distortion compensation 701 and the in-transmitter distortion compensation 705. A WL $2 \times 1$ filter 800 includes a complex conjugate calculating unit 801. The complex conjugate calculating unit 801 calculates a complex conjugate of an input complex signal. In the WL $2 \times 1$ filter 800, a complex signal is input to a FIR filter 802, and a complex conjugate signal is input to a FIR filter 803. The WL $2 \times 1$ filter 800 outputs a signal acquired by adding an output of the FIR filter 802 and an output of the FIR filter 803. The in-receiver distortion compensation 701 and the in-transmitter distortion compensation 705 each have such a WL $2 \times 1$ filter 800 for each polarization.

Characteristics of in-transmitter distortion and in-receiver distortion occurring in an optical communication system are usually unknown. Therefore, filter coefficients of the in-receiver distortion compensation 701 and the in-transmitter distortion compensation 705 need to be adaptively controlled. However, as in the configuration in Fig. 9, it is difficult in this case to control the coefficient, based on a direct input and output of each of filter blocks. This is because, in blocks other than the last in-transmitter distortion compensation 705, distortion that is not compensated for remains in the output. This makes it extremely difficult to design a suitable loss function to be minimized for adaptive control.

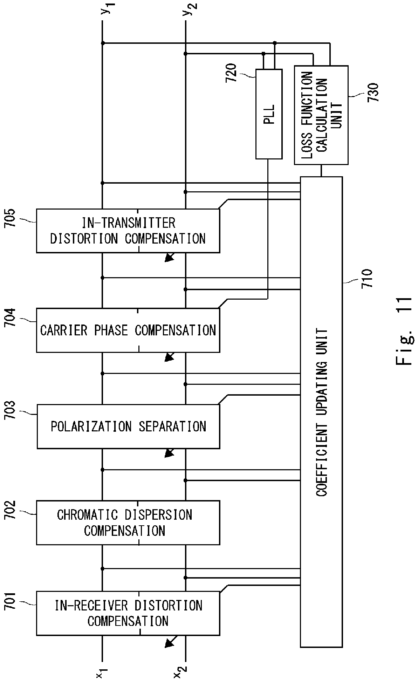

In Fig. 11, a loss function calculating unit 730 calculates, as a loss function, a difference from a desired state of the filter output of a final layer, i.e., the output of the in-transmitter distortion compensation 705. A coefficient updating unit 710 calculates a gradient for the loss function of all the coefficients of each filter block, based on a fact that the outputs of all the filter blocks can be represented differentially with respect to their inputs and coefficients, and based on an error back propagation method. The coefficient updating unit 710 adaptively controls the coefficient of each filter block in such a way as to minimize the loss function by using the calculated gradient.

A PLL 720 controls a phase rotation amount of the carrier phase compensation 704 according to the output of the in-transmitter distortion compensation 705 being the final layer of the filter block. By using the adaptive multi-layer filter illustrated in Fig. 11, even when a plurality of pieces of distortion including IQ distortion in the transmitter and the receiver are present at the same time, high-accuracy receiver side equalization digital signal processing can be achieved.

**Citation List**

**Non Patent Literature**

[Non Patent Literature 1]
S. J. Savory, "Digital filters for coherent optical receivers," Opt. Express 16(2), 804 (2008).
[Non Patent Literature 2]
M. Arikawa and K. Hayashi, "Adaptive equalization of transmitter and receiver IQ skew by multi-layer linear and widely linear filters with deep unfolding," Opt. Express 28(16), 23478 (2020).
[Non Patent Literature 3]
M. Arikawa and K. Hayashi, "Adaptive multi-layer filters incorporated with Volterra filters for impairment compensation including transmitter and receiver nonlinearity," Opt. Express 29(18), 28366 (2021).
[Non Patent Literature 4]
B. I. Bitachon et al., "Deep learning based digital backpropagation demonstrating SNR gain at low complexity in a 1200 km transmission link," Opt. Express 28(20), 29318 (2020).

## Summary of Invention

### Technical Problem

In the adaptive multi-layer filter illustrated in Fig. 11, which is described in Non Patent Literature 2, various pieces of distortion are compensated for multi-layer FIR filters. With this configuration, due to the convolution relationship of the FIR filters, the time span of samples involved in calculations is increased as the layers are tracked back further in such a way as to acquire an output of a sample at a single time after the final distortion compensation. The data being input to the adaptive multi-layer filter is a reception waveform, in other words, a chronological data. In the adaptive multi-layer filter, the processing of acquiring an output of a sample at a single time from a part of a reception waveform for each time, updating a filter coefficient therefrom, and acquiring an output of a sample at a subsequent single time from a subsequent part of a reception waveform is repeated. In this state, when the filter coefficients are calculated in the adaptive multi-layer filter, all the outputs of intermediate filters are calculated again.

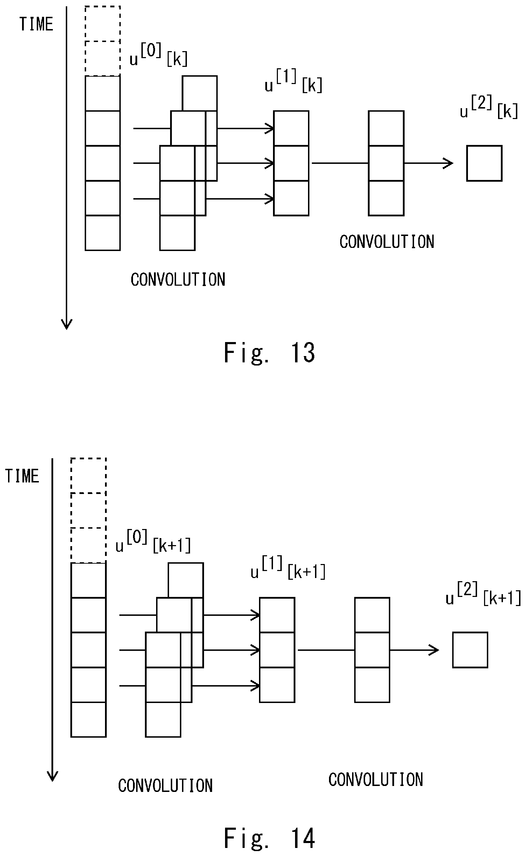

Description is made below on recalculation of the outputs of the intermediate filters that is performed as the filter coefficients are updated. Fig. 13 illustrates processing of an adaptive multi-layer filter at a time k until an output is acquired at the final single time, in a simplified manner. In Fig. 13, it is assumed that the adaptive multi-layer filter is configured by two layers of FIR filters. An output signal vector and an input signal vector of an l-th layer relating to acquisition of a sample of an output signal at the time k are represented respectively as follows.

$$\boldsymbol{u}_i^{[l]}[k] = (u_i^{[l]}[k;k], u_i^{[l]}[k-1;k], \ldots, u_i^{[l]}[k-M_l+1;k])^{\mathrm{T}} \tag{1}$$

$$\boldsymbol{u}_i^{[l-1]}[k] = (u_i^{[l-1]}[k;k], u_i^{[l-1]}[k-1;k], \ldots, u_i^{[l-1]}[k-M_{l-1}+1;k])^{\mathrm{T}} \tag{2}$$

Herein, $u_i^{[1]}[k-m;k]$ represents an m-th element of an output signal vector $u_i^{[1]}[k]$ being calculated by using a filter coefficient at the time k. $M_i$ and $M_{l-1}$ represent lengths of the output signal vector and the input signal vector, respectively. i=1, 2 represents polarizations thereof, respectively. When spatial mode compensation is performed in the adaptive multi-layer filter, i is extended to a value greater than 2.

A filter coefficient $h_{ij}^{[1]}[k]$ of the l-th layer at the time k is represented as follows.

$$\boldsymbol{h}_{ij}^{[l]}[k] = (h_{ij}^{[l]}[0;k], h_{ij}^{[l]}[1;k], \ldots, h_{ij}^{[l]}[M^{[l]}-1;k])^{\mathrm{T}} \tag{3}$$

A tap length $M^{[1]}$ in the filter in the l-th layer is represented as follows due to the convolution relationship.

$$M^{[l]} = M_{l-1} - M_l + 1 \tag{4}$$

When the filter in the l-th layer is an SL MIMO filter, forward direction propagation is represented as follows.

$$\boldsymbol{u}_i^{[l]}[k] = \sum_{j=1}^{2} H_{ij}^{[l]*}[k]\boldsymbol{u}_j^{[l-1]}[k] \tag{5}$$

Herein, the following expression is given.

$$H_{ij}^{[l]}[k] = \begin{pmatrix} h_{ij}^{[l]}[0;k] & h_{ij}^{[l]}[1;k] & \cdots & h_{ij}^{[l]}[M^{[l]}-1;k] & 0 & \cdots & 0 \\ 0 & \ddots & \ddots & & \ddots & \ddots & \vdots \\ \vdots & & & & & & 0 \\ 0 & \cdots & 0 & h_{ij}^{[l]}[0;k] & h_{ij}^{[l]}[1;k] & \cdots & h_{ij}^{[l]}[M^{[l]}-1;k] \end{pmatrix} \tag{6}$$

When Expression 5 given above is modified, the following expressions are given.

4

$$u_i^{[l]}[k] = \sum_{j=1}^{2} U_j^{[l-1]}[k] h_{ij}^{[l]*}[k] \tag{7}$$

$$U_j^{[l-1]}[k] = \begin{pmatrix} u_j^{[l-1]}[k; k] & u_j^{[l-1]}[k-1; k] & \cdots & u_j^{[l-1]}[k-M^{[l]}+1; k] \\ u_j^{[l-1]}[k-1; k] & u_j^{[l-1]}[k-2; k] & \cdots & u_j^{[l-1]}[k-M^{[l]}; k] \\ \vdots & & & \vdots \\ u_j^{[l-1]}[k-M_l+1; k] & u_j^{[l-1]}[k-M_l; k] & \cdots & u_j^{[l-1]}[k-M_{l-1}+1; k] \end{pmatrix} \tag{8}$$

As illustrated in Non Patent Literature 1, even when the filter in the l-th layer is an SL filter arranged for each polarization or a WL filter, calculation similar to that given above can be performed. When the filter in the l-th layer is carrier phase compensation, the filter in the l-th layer is a single tap SL filter arranged for each polarization. Carrier phase compensation is performed through multiplication in the time domain, instead of convolution in the time domain. A compensation amount by carrier phase compensation is changed for each time, and is represented as follows.

$$u_i^{[l]}[k] = H_i^{[l]*}[k : k - M_l + 1] \circ u_i^{[l-1]}[k] \tag{9}$$

Herein, o represents a Hadamard product.

In the example of Fig. 13, in the first layer, the filter coefficient $h^{[1]}[k]$ is convolved with respect to the input vector $u^{[0]}[k]$, and the output vector $u^{[1]}[k]$ is acquired. Similarly, in the second layer, the filter coefficient $h^{[2]}[k]$ is convolved with respect to the input vector $u^{[1]}[k]$, and the output vector $u^{[2]}[k]$ is acquired. In the example of Fig. 13, the second layer is the final layer, and the output is a vector having a length of 1 in the time direction.

In the adaptive multi-layer filter illustrated in Fig. 11, the filter coefficients of all the layers can be updated for each sample at a single time or symbol. When the filter coefficient is updated for each sample at a single time or symbol, it is possible to adapt to fast temporal variations occurring in the transmission path, such as changes in polarization state. It can adapt to fast temporal variations occurring in the transmission channel, such as a polarization state variation. For example, when a DALMS algorithm and a stochastic gradient descent method are used for updating the coefficient, the filter coefficient is updated in such a way as to minimize a loss function $\varphi[k]$. The loss function cp[k] is represented in the following expression, where an output sample of the multi-layer filter is $y_i[k]$, and a training signal is $d_i[k]$.

$$\phi[k] = \sum_{i=1}^{2} |d_i[k] - y_i[k]|^2 \tag{10}$$

Coefficient update for a filter coefficient $\xi$ is represented as follows.

$$\xi^* \to \xi^* - 2\alpha \frac{\partial \phi}{\partial \xi} \tag{11}$$

$\alpha$ represents a step size for determining magnitude of coefficient update. A gradient of the loss function is determined sequentially from the final layer, by using an error back propagation method. In a case of a DALMS algorithm, the gradient of the loss function for the output of the final layer is represented as follows.

$$\frac{\partial \phi}{\partial y_i[k]} = -e_i^* \tag{12}$$

$$\frac{\partial \phi}{\partial y_i^*[k]} = -e_i \tag{13}$$

Herein, an example in which the filter in the l-th layer is an SL MIMO filter is specifically described. When the gradient is given for the output vector of the filter in the l-th layer, the gradient for the input vector and the coefficient is represented as follows due to backward direction propagation.

$$\frac{\partial \phi}{\partial h_{ij}^{[l]}[k]} = U_j^{[l-1]\dagger}[k] \frac{\partial \phi}{\partial u_i^{[l]*}[k]} \tag{14}$$

$$\frac{\partial \phi}{\partial u_j^{[l-1]}[k]} = \sum_{i=1}^{2} H_{ij}^{[l]\dagger}[k] \frac{\partial \phi}{\partial u_i^{[l]}[k]} \tag{15}$$

$$\frac{\partial \phi}{\partial u_j^{[l-1]*}[k]} = \sum_{i=1}^{2} H_{ij}^{[l]\mathrm{T}}[k] \frac{\partial \phi}{\partial u_i^{[l]*}[k]} \tag{16}$$

Further, the case in which the loss function is an actual value is represented as follows.

$$\frac{\partial \phi}{\partial u_j^{[l]*}[k]} = \left( \frac{\partial \phi}{\partial u_j^{[l]}[k]} \right)^* \tag{17}$$

In the adaptive multi-layer filter described in Non Patent Literature 2, calculation of the final output signal sample of the adaptive multi-layer filter at the time k and update of the filter coefficient, based on the final output signal sample, are performed. Subsequently, in the adaptive multi-layer filter, processing similar to the processing at the time k is repeated at the time k+1. Fig. 14 illustrates processing of the adaptive multi-layer filter at the time k+1 until an output is acquired at the final single time, in a simplified manner. In the first layer, the filter coefficient h[1][k+1] is convolved with respect to the input vector u[0][k+1], and the output vector u[1][k+1] is acquired. Similarly, in the second layer, the filter coefficient h[2][k+1] is convolved with respect to the input vector u[1][k+1], and the output vector u[2][k+1] is acquired.

Herein, when the l-th layer is not carrier phase compensation, the output signal vector is represented in the following expression, and does not have an element that is commonly shared with $u_i^{[1]}[k]$ represented in Expression 1 given above.

$$\boldsymbol{u}_i^{[l]}[k+1] = (u_i^{[l]}[k+1; k+1], u_i^{[l]}[k; k+1], \dots, u_i^{[l]}[k - M_l + 2; k+1])^{\mathrm{T}} \tag{18}$$

Therefore, when the filter coefficient is updated, all the outputs of the intermediate layers are recalculated. For example, in the adaptive multi-layer filter, when the filter coefficient is to be updated for each sample (or symbol), all the outputs of the intermediate layers are recalculated for each coefficient update, and thus there arises a problem of increase in calculation amount.

In view of the above-described circumstance, an object of the present disclosure is to provide a communication system, a receiver, an equalization signal processing circuit, an equalization signal processing method, and a computer readable medium that are capable of compensating for various pieces of distortion while preventing increase in calculation amount.

**Solution to Problem**

In order to achieve the above object, according to a first aspect of the present disclosure, there is provided an equalization signal processing circuit. The equalization signal processing circuit includes: a filter group including a plurality of filters being connected in series along a signal path of a reception signal being acquired by coherent-receiving a signal being transmitted from a transmitter via a transmission path; and a coefficient updating means for adaptively controlling filter coefficients of at least some filters of the plurality of filters, by using an error back propagation method, based on a difference between an output signal being output from the filter group and a predetermined value of the output signal. In the equalization signal processing circuit, among the plurality of filters included in the filter group, at least some of one or more filters before a final stage filter convolve the filter coefficients with respect to an input signal vector, and output a calculation result of the convolution and a calculation result of the convolution that is acquired by calculation at a previous time, to a filter in a following stage.

According to a second aspect of the present disclosure, there is provided a receiver. The receiver includes: a receiving circuit configured to coherent-receive a signal being transmitted from a transmitter via a transmission path; and an equalization signal processing circuit configured to perform equalization signal processing with respect to the reception signal being coherent-received. The equalization signal processing circuit includes: a filter group including a plurality of filters being connected in series along a signal path of the reception signal; and a coefficient updating means for adaptively controlling filter coefficients of at least some filters of the plurality of filters, by using an error back propagation method, based on a difference between an output signal being output from the filter group and a predetermined value of the output signal. In the equalization signal processing circuit, among the plurality of filters included in the filter group, at least some of one or more filters before a final stage filter convolve the filter coefficients with respect to an input signal vector, and output a calculation result of the convolution and a calculation result of the convolution that is acquired by calculation at a previous time, to a filter in a following stage.

According to a third aspect of the present disclosure, there is provided a communication system. The communication system includes: a transmitter configured to transmit a signal via a transmission path; and a receiver configured to receive the signal being transmitted. The receiver includes: a receiving circuit configured to coherent-receive a signal being transmitted from the transmitter; and an equalization signal processing circuit configured to perform equalization signal processing with respect to the reception signal being coherent-received. The equalization signal processing circuit includes: a filter group including a plurality of filters being connected in series along a signal path of the reception signal; and a coefficient updating means for adaptively controlling filter coefficients of at least some filters of the plurality of filters, by using an error back propagation method, based on a difference between an output signal being output from the filter group and a predetermined value of the output signal. In the equalization signal processing circuit, among the plurality of filters included in the filter group, at least some of one or more filters before a final stage filter convolve the filter coefficients with respect to an input signal vector, and output a calculation result of the convolution and a calculation result of the convolution that is acquired by calculation at a previous time, to a filter in a following stage.

According to a fourth aspect of the present disclosure, there is provided an equalization signal processing method. The equalization signal processing method includes: performing equalization signal processing with respect to a reception signal by using a filter group including a plurality of filters being connected in series along a signal path of the reception signal being coherent-received; adaptively controlling filter coefficients of at least some filters of the plurality of filters, by using an error back propagation method, based on a difference between an output signal being output from the filter group and a predetermined value of the output signal; and convolving the filter coefficients with respect to an input signal vector by at least some of one or more filters before a final stage filter among the plurality of filters included in the filter group, and outputting, to a filter in a following stage, a calculation result of the convolution and a calculation result of the convolution that is acquired by calculation at a previous time.

According to a fifth aspect of the present disclosure, there is provided a computer readable medium. The computer readable medium stores a program for causing a processor to execute processing of: performing equalization signal processing with respect to a reception signal by using a filter group including a plurality of filters being connected in series along a signal path of the reception signal being coherent-received; adaptively controlling filter coefficients of at least some filters of the plurality of filters, by using an error back propagation method, based on a difference between an output signal being output from the filter group and a predetermined value of the output signal; and convolving the filter coefficients with respect to an input signal vector by at least some of one or more filters before a final stage filter among the plurality of filters included in the filter group, and outputting, to a filter in a following stage, a calculation result of the convolution and a calculation result of the convolution that is acquired by calculation at a previous time.

**Advantageous Effects of Invention**

The communication system, the receiver, the equalization signal processing circuit, the equalization signal processing method, and the computer readable medium according to the present disclosure are capable of compensating for various pieces of distortion while preventing increase in calculation amount.

**Brief Description of Drawings**

Fig. 1 is a block diagram schematically illustrating a communication system according to the present disclosure;
Fig. 2 is a block diagram illustrating a schematic configuration of a receiver;
Fig. 3 is a block diagram illustrating a signal transmission system according to one example embodiment of the present disclosure;
Fig. 4 is a block diagram illustrating an example of digital signal processing in an equalizing unit;
Fig. 5 is a schematic diagram illustrating processing of an adaptive multi-layer filter in a simplified manner;
Fig. 6 is a block diagram illustrating a configuration example of a filter in a first layer of the adaptive multi-layer filter;
Fig. 7 is a graph illustrating a simulation result;
Fig. 8 is a block diagram illustrating a configuration example of the equalizing unit;
Fig. 9 is a block diagram illustrating an example of receiver side equalization digital signal processing described in Non Patent Literature 1;
Fig. 10 is a block diagram illustrating a 2×2 MIMO filter;
Fig. 11 is a block diagram illustrating an adaptive multi-layer filter for performing equalization signal processing;
Fig. 12 is a block diagram illustrating a WL 2×1 filter;
Fig. 13 is a schematic diagram illustrating processing of an adaptive multi-layer filter at a time k in a simplified manner; and
Fig. 14 is a schematic diagram illustrating processing of an adaptive multi-layer filter at a time k+1 in a simplified manner.

**Example Embodiment**

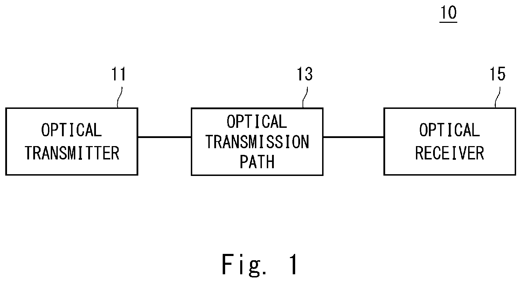

Prior to description of an example embodiment of the present disclosure, an outline of the present disclosure will be described. Fig. 1 schematically illustrates a communication system according to the present disclosure. A communication system 10 includes a transmitter 11 and a receiver 15. The transmitter 11 and the receiver 15 are connected to each other via a transmission path 13. The transmitter 11 transmits a signal via the transmission path 13. The receiver 15 receives a signal transmitted from the transmitter 11 via the transmission path 13.

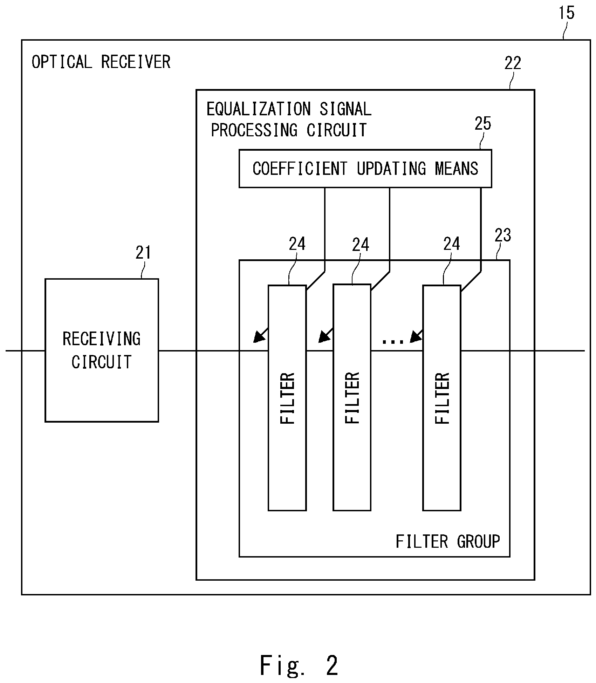

Fig. 2 illustrates a schematic configuration of the receiver 15. The receiver 15 includes a receiving circuit 21 and an equalization signal processing circuit 22. The receiving circuit 21 coherent-receives a signal transmitted from the transmitter 11. The equalization signal processing circuit 22 performs equalization signal processing on the reception signal being coherent-received.

The equalization signal processing circuit 22 includes a filter group 23 and a coefficient updating means 25. The filter group 23 includes a plurality of filters 24 connected in series along a signal path of a reception signal. The coefficient updating means 25 adaptively controls filter coefficients of at least some filters of the plurality of filters 24 included in the filter group 23, by using the error back propagation method, based on a difference between an output signal being output from the filter group 23 and a predetermined value of the output signal.

Among the plurality of filters 24 included in the filter group 23, at least some of one or more filters in an intermediate layer before a filter in a final stage convolve the filter coefficients with respect to the input signal vectors. At least some of one or more filters in the intermediate layer outputs, to a filter in the following stage, a calculation result of the convolution at a current time and a calculation result of the convolution that is acquired by calculation at a previous time.

In the optical communication system, in particular, the optical fiber communication system in which various pieces of distortion that may include in-transmitter/receiver distortion are present, when coefficient update is successively performed with a multi-layer filter configuration by using an error back propagation method in such a way as to compensate those pieces of distortion, there arises a problem that a calculation amount increases. In the present disclosure, at least some of one or more filters in the intermediate layer outputs, to the filter in the following stage, the calculation result of the convolution at the current time and the calculation result of the convolution that is acquired by calculation at the previous time. In this manner, the equalization signal processing circuit 22 can reduce a calculation amount of the filter group 23 as compared to a case in which all the outputs of the intermediate layers are recalculated for each sample.

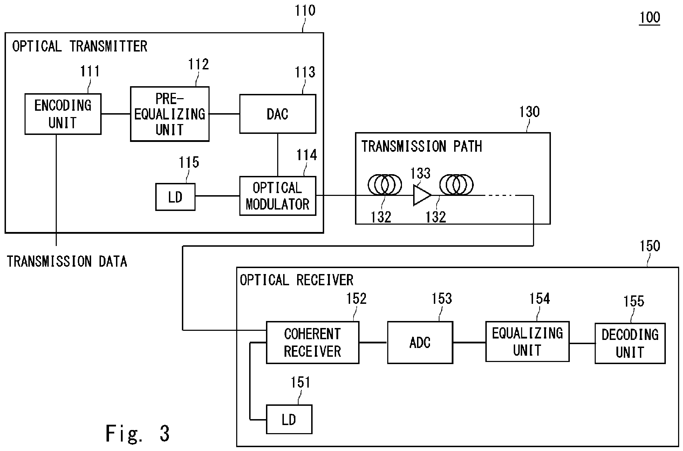

Hereinafter, an example embodiment of the present disclosure will be described in detail with reference to the drawings. Fig. 3 illustrates a signal transmission system according to one example embodiment of the present disclosure. In the present example embodiment, it is assumed that the signal transmission system is an optical fiber communication system that adopts a polarization multiplexing QAM system and performs coherent reception. An optical fiber communication system 100 includes an optical transmitter 110, a transmission path 130, and an optical receiver 150. The optical fiber communication system 100 constitutes, for example, an optical submarine cable system. The optical fiber communication system 100 is associated with the communication system 10 illustrated in Fig. 1. The optical transmitter 110 is associated with the transmitter 11 illustrated in Fig. 1. The transmission path 130 is associated with the transmission path 13 illustrated in Fig. 1. The optical receiver 150 is associated with the receiver 15 illustrated in Fig. 1.

The optical transmitter 110 converts a transmission data into a polarization multiplexed optical signal. The optical transmitter 110 includes an encoding unit 111, a pre-equalizing unit 112, a digital analog converter (DAC) 113, an optical modulator 114, and a laser diode (LD) 115. The encoding unit 111 encodes a transmission data and generates a signal sequence for optical modulation. In a case of the polarization multiplexing QAM system, the encoding unit 111 generates a total of four series of signals being an in-phase (I) component and a quadrature (Q) component of each of X polarization (first polarization) and Y polarization (second polarization). Note that, in Fig. 3, for the sake of simplification of the drawing, encoded four-series signals are illustrated as one solid line. Hereinafter, one solid line illustrated in Fig. 3 collectively represents signal series having a predetermined number, as a physical entity

The pre-equalizing unit 112 performs pre-equalization for compensating for distortion or the like of a device in the optical transmitter in advance for the encoded four-series signal. The DAC 113 converts each of the four-series signals being performed the pre-equalization into an analog electric signal.

The LD 115 outputs continuous wave (CW) light. The optical modulator 114 modulates the CW light output from the LD 115 in response to the four-series signals output from the DAC 113, and generates an optical signal of polarization multiplexing QAM. The optical signal (polarization multiplexed optical signal) generated by the optical modulator 114 is output to the transmission path 130.

The transmission path 130 transmits the polarization multiplexed optical signal output from the optical transmitter 110 to the optical receiver 150. The transmission path 130 includes an optical fiber 132 and an optical amplifier 133. The optical fiber 132 guides an optical signal transmitted from the optical transmitter 110. The optical amplifier 133 amplifies an optical signal, and compensates for a propagation loss in the optical fiber 132. The optical amplifier 133 is configured, for example, as an erbium doped fiber amplifier (EDFA). The transmission path 130 may include a plurality of optical amplifiers 133.

The optical receiver 150 includes an LD 151, a coherent receiver 152, an analog digital converter (ADC) 153, an equalizing unit 154, and a decoding unit 155. In the optical receiver 150, circuits such as the equalizing unit (equalizer) 154 and the decoding unit (decoder) 155 may be configured by using a device such as a digital signal processor (DSP), for example.

The LD 151 outputs CW light as local oscillator light. In the present example embodiment, the coherent receiver 152 is configured as a polarization diversity type coherent receiver. The coherent receiver 152 performs coherent detection on an optical signal transmitted through the optical fiber 132, by using the CW light output from the LD 151. The coherent receiver 152 outputs four-series reception signals (electric signals) being equivalent to the I component and Q component of the X polarization and Y polarization being performed coherent detection. The coherent receiver 152 is associated with the receiving circuit 21 illustrated in Fig. 2.

The ADC 153 samples the reception signal output from the coherent receiver 152, and converts the reception signal into a signal in a digital domain. The equalizing unit 154 performs receiver side equalization signal processing on the four-series reception signals being sampled by the ADC 153. The equalizing unit 154 performs equalization signal processing on the reception signal, and thereby compensates for various pieces of distortion in the optical fiber communication system. The equalizing unit 154 is associated with the equalization signal processing circuit 22 illustrated in Fig. 2. The decoding unit 155 decodes the signal being performed the equalization signal processing by the equalizing unit 154, and restores the transmitted data. The decoding unit 155 outputs the restored data to not-illustrated another circuit

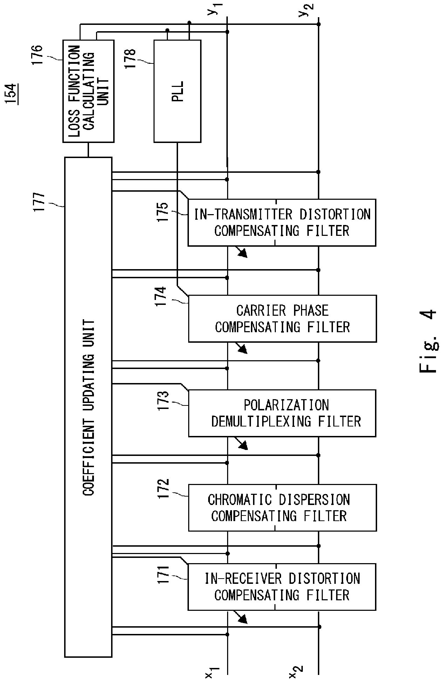

Fig. 4 illustrates a specific example of digital signal processing. The digital signal processing includes an in-receiver distortion compensating filter 171, a chromatic dispersion compensating filter 172, a polarization demultiplexing filter 173, a carrier phase compensating filter 174, an in-transmitter distortion compensating filter 175, a loss function calculating unit 176, a coefficient updating unit 177, and the PLL 178. The digital signal processing configures the equalization signal processing circuit that performs an equalization signal processing method according to the present example embodiment.

The in-receiver distortion compensating filter 171 compensates for signal distortion occurring in the optical receiver 150 (Fig. 3). The chromatic dispersion compensating filter 172 compensates for signal distortion caused by chromatic dispersion during optical fiber transmission. The polarization demultiplexing filter 173 compensates for signal distortion caused by a polarization state variation and polarization mode dispersion during optical fiber transmission. The carrier phase compensating filter 174 compensates for signal distortion caused by the frequency offset and the phase offset between the carrier of the transmitted optical signal and the local oscillator light on the receiver side. The in-transmitter distortion compensating filter 175 compensates for signal distortion occurring in the optical transmitter 110. The in-receiver distortion compensating filter 171, the chromatic dispersion compensating filter 172, the polarization demultiplexing filter 173, the carrier phase compensating filter 174, and the in-transmitter distortion compensating filter 175 are associated with the filters 24, respectively, included in the filter group 23 illustrated in Fig. 2.

In Fig. 4, the filter of each of the blocks is configured according to characteristics of distortion to be compensated for. For example, the filter of each of the blocks is configured by using a FIR filter. In the filter of the each of the blocks, a tap length of the FIR filter is set to a tab length according to characteristics of distortion to be compensated for.

The in-receiver distortion compensating filter 171 includes a WL 2×1 filter being arranged for each polarization. The chromatic dispersion compensating filter 172 includes an SL filter being arranged for each polarization. The polarization demultiplexing filter 173 includes a 2×2 MIMO SL filter. The carrier phase compensating filter 174 includes an SL filter being arranged for each polarization. The in-transmitter distortion compensating filter 175 includes a WL 2×1 filter being arranged for each polarization.

Note that description is made above on the example in which the digital signal processing (multi-layer filter) includes five layers of filters for performing in-receiver distortion compensation, chromatic dispersion compensation, polarization demultiplexing, carrier phase compensation, and in-transmitter distortion compensation. However, the present example embodiment is not limited thereto. The digital signal processing may include a non-linear filter such as a Volterra filter as described in Non Patent Literature 3. Alternatively, the digital signal processing may include a non-linear filter for compensating for a non-linear effect in fiber propagation as illustrated in Non Patent Literature 4.

Herein, in general, chromatic dispersion in the transmission path is static as long as switching of the transmission path or the like is not performed, and a distortion model is determined according to a type of an optical fiber and a transmission distance. Thus, the filter of the chromatic dispersion compensating filter 172 may be statically handled after the coefficient is once set according to a chromatic dispersion amount by which compensation is performed. The coefficient of the carrier phase compensating filter 174 is controlled by the PLL 178. The PLL 178 determines a phase rotation amount of the carrier phase compensating filter 174, based on the output from the in-transmitter distortion compensating filter 175, which is final output from the filter block.

The loss function calculating unit 176 calculates, as a loss function, a difference between the output from the in-transmitter distortion compensating filter 175 being the final stage of the series of filters described above and a desired state. The coefficient updating unit 177 updates the coefficients of the in-receiver distortion compensating filter 171, the polarization demultiplexing filter 173, and the in-transmitter distortion compensating filter 175. For example, the coefficient updating unit 177 updates the coefficient of the each of the filters for each sample at a single time or a symbol. For example, the coefficient updating unit 177 successively updates the coefficient of each of the filters by using an error back propagation method and a gradient descent method in such a way as to minimize the loss function. For example, the coefficient updating unit 177 updates the filter coefficient of each of the filters by using a DALMS algorithm and a stochastic gradient descent method. The coefficient updating unit 177 is associated with the coefficient updating means 25 illustrated in Fig. 2.

Herein, in general, for coefficient update by a stochastic gradient descent method, a small step size is used. Thus, it is reasonable to assumed that the following expression holds with n as a suitable index referring to an element of a signal vector.

$$u_i^{[l]}[k-n; k+1] \sim u_i^{[l]}[k-n; k] \tag{19}$$

When the expression given above holds, the output signal vector $u_i^{[1]}[k+1]$ of the filter in the l-th layer at the time k+1, which is represented in Expression 18, is represented as follows.

$$u_i^{[l]}[k+1] = (u_i^{[l]}[k+1; k+1], u_i^{[l]}[k; k], \ldots, u_i^{[l]}[k-M_l+2; k])^{\mathrm{T}} \tag{20}$$

In this case, in the output signal vector $u_i^{[1]}[k+1]$, the second and subsequent elements are included in the output signal vector $u_i^{[1]}[k]$ at the previous time k. Further, it is reasonable to assume the following expression.

$$u_i^{[l]}[k-n; k+1] \sim u_i^{[l]}[k-n; k-n] \tag{21}$$

In this case, the following expressions are given.

$$u_i^{[l]}[k+1] = (u_i^{[l]}[k+1; k+1], u_i^{[l]}[k; k], \ldots, u_i^{[l]}[k-M_l+2; k-M_l+2])^{\mathrm{T}} \tag{22}$$

$$u_i^{[l]}[k] = (u_i^{[l]}[k; k], u_i^{[l]}[k-1; k-1], \ldots, u_i^{[l]}[k-M_l+1; k-M_l+1])^{\mathrm{T}} \tag{23}$$

As apparent from the above, at the time k, it is only required to calculate the element $u_i^{[1]}[k;k]$ instead of the output signal vector $u_i^{[1]}[k]$ as a whole.

Description is made below on signal propagation in forward direction propagation, in other words, a filter signal output direction of the multi-layer filter. When the filter in the l-th layer is an SL MIMO filter, forward direction propagation is represented as follows.

$$ \boldsymbol{u}_i^{[l]}[k] = \sum_{j=1}^{2} H_{ij}^{[l]*}[k:k-M_l+1]\boldsymbol{u}_j^{[l-1]}[k] \qquad (24) $$

Herein, the following expression is given.

$$ H_{ij}^{[l]}[k:k-M_l+1] = $$
$$ \begin{pmatrix} h_{ij}^{[l]}[0;k] & h_{ij}^{[l]}[1;k] & \cdots & h_{ij}^{[l]}[M^{[l]}-1;k] & 0 & \cdots & 0 \\ 0 & \ddots & \ddots & & \ddots & \ddots & \vdots \\ \vdots & & & & & & 0 \\ 0 & \cdots & 0 & h_{ij}^{[l]}[0;k-M_l+1] & h_{ij}^{[l]}[1;k-M_l+1] & \cdots & h_{ij}^{[l]}[M^{[l]}-1;k-M_l+1] \end{pmatrix} $$
$$ (25) $$

As described above, in the present example embodiment, of the output signal vector $u_i^{[1]}[k]$, only the element $u_i^{[1]}[k;k]$ is required to be newly calculated at the time k. The output signal vector $u_i^{[1]}[k]$ (and $H_{ij}[l][k:k-M_l+1]$) is acquired by shifting the vector element from the calculation result $u_i^{[1]}[k-1]$ at the time k=k-1. Thus, in the present example embodiment, calculation of forward direction propagation can be significantly simplified. This holds true when the filter in the l-th layer is an SL filter or a WL filter.

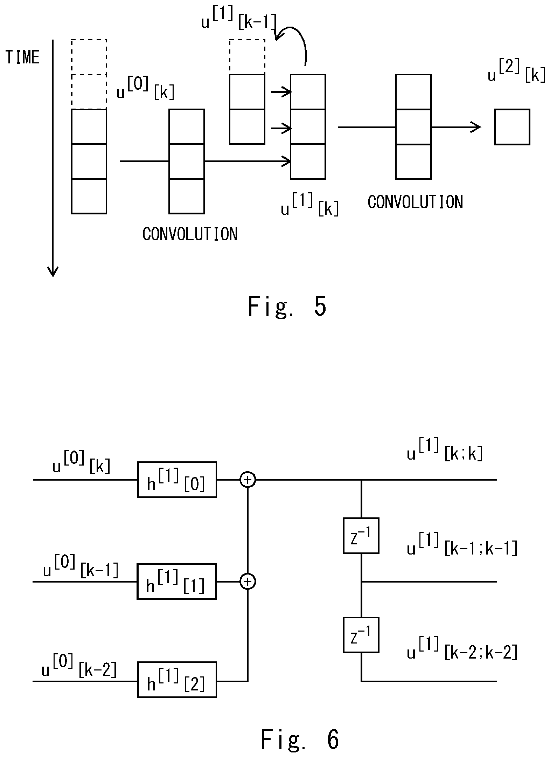

Fig. 5 illustrates processing of the adaptive multi-layer filter at the time k until an output is acquired at the final single time, in a simplified manner. In Fig. 5, the adaptive multi-layer filter includes two layers of FIR filters. In the adaptive multi-layer filter, the filter in the first layer being an intermediate layer convolves the filter coefficient vector $h^{[1]}[k]$ with respect to the input signal vector $u^{[0]}[k]$, and outputs the output signal vector $u^{[1]}[k]$. At the time k, the filter in the first layer newly calculates the first element $u^{[1]}[k;k]$ of the elements of the output signal vector $u^{[1]}[k]$. At the time k, the filter in the first layer does not perform calculation for other elements $u^{[1]}[k-1;k-1], \ldots, u^{[1]}[k-M_l+1;k-M_l+1]$, and a result of the calculation at the past time is used. The filter in the second layer convolves the filter coefficient vector $h^{[2]}[k]$ with respect to the input signal vector $u^{[1]}[k]$, and outputs the output signal vector $u^{[2]}[k]$.

Fig. 6 illustrates a configuration example of the filter in the first layer of the adaptive multi-layer filter illustrated in Fig. 5. It is assumed that the input signal vector of the filter in the first layer at the time k is $u^{[0]}[k]= (u^{[0]}[k], u^{[0]}[k-1], u^{[0]}[k-2], u^{[0]}[k-3], u^{[0]}[k-4])$. The input signal vector is acquired by delaying the input signal at each time by using a delay element. The filter in the first layer convolves the filter coefficient vectors $(h^{[1]}[0;k], h^{[1]}[1;k], h^{[1]}[2;k])$ with respect to $(u^{[0]}[k], u^{[0]}[k-1], u^{[0]}[k-2])$ of the input signal vectors $(u^{[0]}[k], u^{[0]}[k-1], u^{[0]}[k-2], u^{[0]}[k-3], u^{[0]}[k-4])$, and calculates the first element $u^{[1]}[k;k]$ of the output signal vectors at the time k.

The filter in the first layer includes one or more delay elements that delay a convolution calculation result. In Fig. 6, the filter in the first layer includes two delay elements connected in series. The filter in the first layer delays $u^{[1]}[k-1;k-1]$ being calculated at the previous time k-1 by using the delay element in the first stage. Further, the filter in the first layer delays $u^{[1]}[k-2;k-2]$ being calculated at the previous time k-2 by using the delay element in the second stage. The filter in the first layer outputs, as the output signal vector $u^{[1]}[k]$ at the time k, $u^{[1]}[k;k]$ being calculated at the time k and $u^{[1]}[k-1;k-1]$ and $u^{[1]}[k-2;k-2]$ being delayed by using the delay elements. The output signal vector $u^{[1]}[k]$ of the filter in the first layer is given as an input signal vector of the filter in the second layer. The filter in the second layer convolves the filter coefficient vectors $(h^{[2]}[0;k], h^{[2]}[1;k], h^{[2]}[2;k])$ with respect to the input vectors $(u^{[1]}[k;k], u^{[1]}[k-1;k-1], u^{[1]}[k-2;k-2])$.

At the subsequent time k+1, the first filter convolves the filter coefficient vectors $(h^{[1]}[0;k+1], h^{[1]}[1;k+1], h^{[1]}[2;k+1])$ with respect to $(u^{[0]}[k+1], u^{[0]}[k], u^{[0]}[k-1])$ of the input signal vectors $(u^{[0]}[k+1], u^{[0]}[k], u^{[0]}[k-1], u^{[0]}[k-2], u^{[0]}[k-3])$, and calculates the first element $u^{[1]}[k+1;k+1]$ of the output signal vectors at the time k+1. The filter in the first layer outputs, as the output signal vector $u^{[1]}[k+1]$ at the time k+1, $u^{[1]}[k+1;k+1]$ being calculated at the time k+1 and $u^{[1]}[k;k]$ and $u^{[1]}[k-1;k-1]$ being calculated by using the delay elements. The filter in the second layer convolves the filter coefficient vectors $(h^{[2]}[0;k+1], h^{[2]}[1;k+1], h^{[2]}[2;k+1])$ with respect to the input signal vectors $(u^{[1]}[k+1;k+1], u^{[1]}[k;k], u^{[1]}[k-1;k-1])$.

Next, description is made on calculation in backward direction propagation, in other words, a direction in which the gradient of the loss function is calculated by an error back propagation method. When the filter in the l-th layer is an SL MIMO filter, backward direction propagation is calculated in the following manner. The gradient of the input signal vector of the loss function is represented as follows.

$$\frac{\partial \phi}{\partial u_j^{[l-1]}[k]} = \sum_{i=1}^{2} H_{ij}^{[l]\dagger}[k:k-M_l+1]\frac{\partial \phi}{\partial u_i^{[l]}[k]} \tag{26}$$

$$\frac{\partial \phi}{\partial u_j^{[l-1]*}[k]} = \sum_{i=1}^{2} H_{ij}^{[l]\mathrm{T}}[k:k-M_l+1]\frac{\partial \phi}{\partial u_i^{[l]*}[k]} \tag{27}$$

The gradient of the filter coefficient in the loss function at the time k is represented as follows.

$$\frac{\partial \phi}{\partial h_{ij}^{[l]}[k]} = \frac{\partial \phi}{\partial u_i^{[l]*}[k]}\bar{u}_j^{[l-1]*}[k] \tag{28}$$

$$\bar{u}_i^{[l-1]}[k] = (u_i^{[l-1]}[k], u_i^{[l-1]}[k-1], \ldots, u_i^{[l-1]}[k-M^{[l]}+1])^{\mathrm{T}} \tag{29}$$

However, with a configuration of a typical causal FIR filter, $\partial\varphi/\partial u_i^{[1]*}[k]$ tends to be a small value, and hence the gradient described above is not sufficient for coefficient update. In view of this, in the present example embodiment, in place of the expression given above, the coefficient updating unit 177 uses, as the gradients with respect to the coefficients at the current time k, the sum of the gradients with respect to the coefficients at the previous time that are in association therewith. In other words, the following expression is given.

$$\frac{\partial \phi}{\partial h_{ij}^{[l]}[k]} \to \sum_{n=0}^{M_l-1} \frac{\partial \phi}{\partial h_{ij}^{[l]}[k-n]} \tag{30}$$

In this case, the right side of Expression 30 given above is represented as follows.

$$\sum_{n=0}^{M_l-1} \frac{\partial \phi}{\partial h_{ij}^{[l]}[k-n]} = U_j^{[l-1]\dagger}[k:k-M_{l-1}+1]\frac{\partial \phi}{\partial u_i^{[l]*}[k]} \tag{31}$$

Herein, the following expression is given.

$$U_j^{[l-1]}[k:k-M_{l-1}+1] =$$
$$\begin{pmatrix} u_j^{[l-1]}[k;k] & u_j^{[l-1]}[k-1;k-1] & \cdots & u_j^{[l-1]}[k-M^{[l]}+1;k-M^{[l]}+1] \\ u_j^{[l-1]}[k-1;k-1] & u_j^{[l-1]}[k-2;k-2] & \cdots & u_j^{[l-1]}[k-M^{[l]};k-M^{[l]}] \\ \vdots & & & \vdots \\ u_j^{[l-1]}[k-M_l+1;k-M_l+1] & u_j^{[l-1]}[k-M_l;k-M_l] & \cdots & u_j^{[l-1]}[k-M_{l-1}+1;k-M_{l-1}+1] \end{pmatrix} \tag{32}$$

Similarly, when the filter in the l-th layer is an SL filter or a WL filter for each polarization, coefficient update can be functioned appropriately by using the sum of the gradients with respect to the coefficients at the previous time that are in association therewith, in place of the gradients of the coefficients at the current time.

In the present example embodiment, in the filter in the intermediate layer of the multi-layer filter for which the filter coefficients are adaptively updated according to the output signal in the final stage of the multi-layer filter, only some of the plurality of elements included in the output signal vector are calculated, and the result being calculated at the previous time is used for the remaining elements. As described above, for example, in a strict sense, when the filter in the intermediate layer is updated for a single time, all the elements included in the output signal vector of the filter in the intermediate layer are required to be calculated at the subsequent time as the filter coefficients are updated. In the present example embodiment, while focusing on the fact that a step size for coefficient update is small, only the convolution of the element associated with the latest time (current time) is calculated, and the result being calculated at the previous time is used for the other elements. In this manner, as compared to a case in which convolution calculation is performed for all the elements of the filter in the intermediate layer, the calculation amount in the adaptive multi-layer filter can be reduced.

Further, in the present example embodiment, the coefficient updating unit 177 calculates the gradients with respect to the filter coefficients by using an error back propagation method and a gradient descent method, and thus updates the filter coefficients in such a way as to minimize the loss function. For filter coefficient update, the coefficient updating unit 177 uses the sum of the gradients with respect to the coefficients at the previous time as the gradients with respect to the coefficients at the current time in reverse calculation for the filter in the intermediate layer for which the result being calculated at the previous time is used. In this manner, when filter coefficient update using an error back propagation method and a gradient descent method is performed successively with a multi-layer filter configuration, the filter coefficients can be updated appropriately. As a result, the present example embodiment can significantly reduce the calculation amount in the intermediate layer while achieving high compensation performance with respect to various pieces of distortion.

Description is made below on reduction in calculation amount in the present example embodiment. Herein, calculation by a typical adaptive multi-layer filter is referred to as exact calculation (Exact), and calculation in the present example embodiment is referred to as approximate calculation (Approx). In Table 1 given below, the calculation amounts in forward direction propagation and backward direction propagation per output sample time when the filter in the l-th layer is an SL MIMO filter are shown.

Table 1: The number of complex multiplications required for the filter in the l-th layer

|  | Forward direction propagation | Backward direction propagation |
|---|---|---|
| Exact | $4M^{[1]}M_1$ | $8M^{[1]}M_1$ |
| Approx | $4M^{[1]}$ | $8M^{[1]}M_1$ |

In general, due to the relationship in Expression 4, the length $M_i$ of the output signal vector of the l-th layer tends to be a greater value in the initial layers of the multi-layer filter. It is understood that, in forward direction propagation, the calculation amount of exact calculation is $M_i$ times the calculation amount of approximate calculation, and approximate calculation can significantly reduce the calculation amount as compared to exact calculation. In the adaptive multi-layer filter, forward direction calculation is required to be performed for all the sample times in such a way as to acquire an output sample. Thus, approximate calculation that can reduce the calculation amount in forward direction propagation is advantageous.

The inventor performed a simulation to verify the performance of distortion compensation in the configuration of the present example embodiment. In the simulation, transmission of a 32 Gbaud polarization division multiplexed quadrature phase-shift keying (PDM-QPSK) signal in a single mode fiber in 100 km was simulated. For the sake of simplification, it was assumed that there was no polarization rotation, polarization mode dispersion (PMD), or laser phase error. Further, it was assumed that no non-linear distortion occurred, and a reception optical signal to noise ratio (OSNR) was 30 dB/0.1 nm.

In the simulation, distortion compensation by a multi-layer filter including five layers was performed. Further, the simulation was performed in three cases including a case in which only chromatic dispersion (CD) was given, a case in which IQ skew (TxIQskew) was given in the transmitter in addition to chromatic dispersion, and a case in which IQ skew (RxIQskew) was given in the receiver in addition to chromatic dispersion. It was assumed that the IQ skew was 5 ps, and the IQ skew was given to a X-polarization signal in the transmitter or the receiver. The input signal of the multi-layer filter was a signal being double-oversampled, and DDLMS was used for coefficient update.

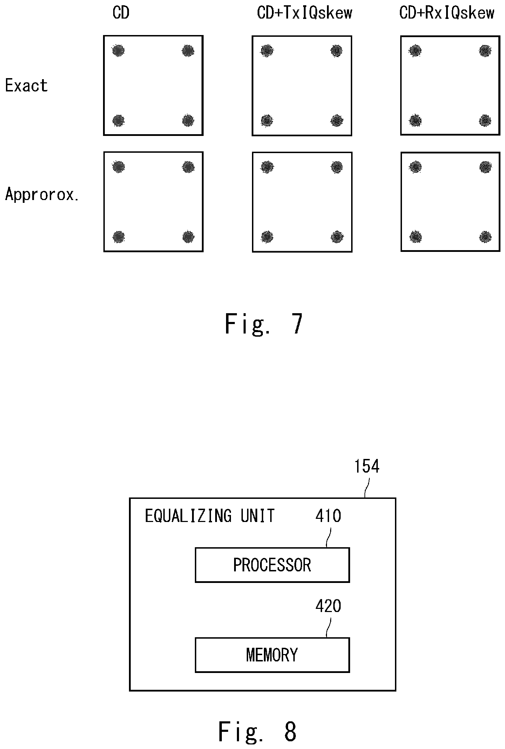

Fig. 7 illustrates the simulation result. In Fig. 7, the simulation result is represented as a constellation diagram acquired by mapping the demodulated signals of the multi-layer filter at a symbol timing on an IQ plane. With reference to the constellation diagram illustrated in Fig. 7, it is understood that, even when approximate calculation was used, performance of compensating for the IQ skew in both the Tx and the Rx, which was equivalent to that in exact calculation, was acquired. When approximate calculation and exact calculation were compared with each other with regard to error vector magnitude (EVM) of the signal after distortion compensation, the difference between approximate calculation and exact calculation was equal to or less than 0.01%. With this, validity of approximate calculation was confirmed.

Note that, in the example embodiments described above, the equalizing unit 154 may be configured as a freely selected digital signal processing circuit. Fig. 8 illustrates a configuration example of the equalizing unit 154. For example, the equalizing unit 154 includes one or more processors 410 and one or more memories 420. The processor 410 reads a program being stored in the memory 420, and thereby performs receiver side equalization digital signal processing.

The above program includes instructions (or software codes) that, when loaded into a computer, cause the computer to perform one or more of the functions described in the embodiments. The program may be stored in a non-transitory computer readable medium or a tangible storage medium. By way of example, and not a limitation, non-transitory computer readable media or tangible storage media can include a random-access memory (RAM), a read-only memory (ROM), a flash memory, a solid-state drive (SSD) or other types of memory technologies, a compact disc (CD), a digital versatile disc (DVD), a Blu-ray disc or other types of optical disc storage, and magnetic cassettes, magnetic tape, magnetic disk storage or other types of magnetic storage devices. The program may be transmitted on a transitory computer readable medium or a communication medium. By way of example, and not a limitation, transitory computer readable media or communication media can include electrical, optical, acoustical, or other forms of propagated signals.

While the example embodiments of the present disclosure have been explained in detail above, the present disclosure is not limited to the above-described example embodiments, and changes and modifications to the above-described example embodiments without departing from the spirit of the present disclosure are also included in the present disclosure.

For example, some or all of the above-described example embodiments may be described as follows, but are not limited thereto.

[Supplementary note 1]

An equalization signal processing circuit including:

a filter group including a plurality of filters being connected in series along a signal path of a reception signal being acquired by coherent-receiving a signal being transmitted from a transmitter via a transmission path; and

a coefficient updating means for adaptively controlling filter coefficients of at least some filters of the plurality of filters, by using an error back propagation method, based on a difference between an output signal being output from the filter group and a predetermined value of the output signal,

wherein, among the plurality of filters included in the filter group, at least some of one or more filters before a final stage filter convolve the filter coefficients with respect to an input signal vector, and output a calculation result of the convolution and a calculation result of the convolution that is acquired by calculation at a previous time, to a filter in a following stage.

[Supplementary note 2]

The equalization signal processing circuit according to Supplementary note 1, wherein the coefficient updating means controls the coefficients by calculating gradients with respect to the filter coefficients in such a way as to minimize magnitude of the difference, and updates the filter coefficients by using a sum of gradients with respect to the coefficients at a previous time as a gradient with respect to a coefficient at a current time in reverse calculation for at least some filters of the one or more filters.

[Supplementary note 3]

The equalization signal processing circuit according to Supplementary note 1 or 2, wherein at least some of the one or more filters includes one or more delay elements that delay the calculation result of the convolution.

[Supplementary note 4]

The equalization signal processing circuit according to Supplementary note 3, wherein at least some of the one or more filters includes a plurality of the delay elements, and the plurality of delay elements are connected to one another in series.

[Supplementary note 5]

The equalization signal processing circuit according to any one of Supplementary notes 1 to 4, wherein the filter group includes at least one of an in-receiver distortion compensating filter, a chromatic dispersion compensating filter, a polarization demultiplexing filter, a carrier phase compensating filter, and an in-transmitter distortion compensating filter.

[Supplementary note 6]

A receiver including:

a receiving circuit configured to coherent-receive a signal being transmitted from a transmitter via a transmission path; and
an equalization signal processing circuit configured to perform equalization signal processing with respect to the reception signal being coherent-received, wherein
the equalization signal processing circuit includes:

a filter group including a plurality of filters being connected in series along a signal path of the reception signal; and
a coefficient updating means for adaptively controlling filter coefficients of at least some filters of the plurality of filters, by using an error back propagation method, based on a difference between an output signal being output from the filter group and a predetermined value of the output signal, and,

among the plurality of filters included in the filter group, at least some of one or more filters before a final stage filter convolve the filter coefficients with respect to an input signal vector, and output a calculation result of the convolution and a calculation result of the convolution that is acquired by calculation at a previous time, to a filter in a following stage.

[Supplementary note 7]

The receiver according to Supplementary note 6, wherein the coefficient updating means controls the coefficients by calculating gradients with respect to the filter coefficients in such a way as to minimize magnitude of the difference, and updates the filter coefficients by using a sum of gradients with respect to the coefficients at a previous time as a gradient with respect to a coefficient at a current time in reverse calculation for an intermediate filter.

[Supplementary note 8]

The receiver according to Supplementary note 6 or 7, wherein at least some of the one or more filters include one or more delay elements that delay the calculation result of the convolution.

[Supplementary note 9]

The receiver according to Supplementary note 8, wherein at least some of the one or more filters include a plurality of the delay elements, and the plurality of delay elements are connected to one another in series.

[Supplementary note 10]

The receiver according to any one of Supplementary notes 6 to 9, wherein the filter group includes at least one of an in-receiver distortion compensating filter, a chromatic dispersion compensating filter, a polarization demultiplexing filter, a carrier phase compensating filter, and an in-transmitter distortion compensating filter.

[Supplementary note 11]

A communication system including:

a transmitter configured to transmit a signal via a transmission path; and
a receiver configured to receive the signal being transmitted, wherein
the receiver includes:

a receiving circuit configured to coherent-receive a signal being transmitted from the transmitter; and
an equalization signal processing circuit configured to perform equalization signal processing with respect to the reception signal being coherent-received,

the equalization signal processing circuit includes:

a filter group including a plurality of filters being connected in series along a signal path of the reception signal; and

a coefficient updating means for adaptively controlling filter coefficients of at least some filters of the plurality of filters, by using an error back propagation method, based on a difference between an output signal being output from the filter group and a predetermined value of the output signal, and,

among the plurality of filters included in the filter group, at least some of one or more filters before a final stage filter convolve the filter coefficients with respect to an input signal vector, and output a calculation result of the convolution and a calculation result of the convolution that is acquired by calculation at a previous time, to a filter in a following stage.

[Supplementary note 12]

The communication system according to Supplementary note 11, wherein the coefficient updating means controls the coefficients by calculating gradients with respect to the filter coefficients in such a way as to minimize magnitude of the difference, and updates the filter coefficients by using a sum of gradients with respect to coefficients at a previous time as a gradient with respect to a coefficient at a current time in reverse calculation for an intermediate filter.

[Supplementary note 13]

An equalization signal processing method including:

performing equalization signal processing with respect to a reception signal by using a filter group including a plurality of filters being connected in series along a signal path of the reception signal being coherent-received;

adaptively controlling filter coefficients of at least some filters of the plurality of filters, by using an error back propagation method, based on a difference between an output signal being output from the filter group and a predetermined value of the output signal; and

convolving the filter coefficients with respect to an input signal vector by at least some of one or more filters before a final stage filter among the plurality of filters included in the filter group, and outputting, to a filter in a following stage, a calculation result of the convolution and a calculation result of the convolution that is acquired by calculation at a previous time.

[Supplementary note 14]

A non-transitory computer readable medium configured to store a program for causing a processor to execute processing of:

performing equalization signal processing with respect to a reception signal by using a filter group including a plurality of filters being connected in series along a signal path of the reception signal being coherent-received;

adaptively controlling filter coefficients of at least some filters of the plurality of filters, by using an error back propagation method, based on a difference between an output signal being output from the filter group and a predetermined value of the output signal; and

convolving the filter coefficients with respect to an input signal vector by at least some of one or more filters before a final stage filter among the plurality of filters included in the filter group, and outputting, to a filter in a following stage, a calculation result of the convolution and a calculation result of the convolution that is acquired by calculation at a previous time.

**Reference Signs List**

10      COMMUNICATION SYSTEM

11      TRANSMITTER

15      RECEIVER

13      TRANSMISSION PATH

| 21 | RECEIVING CIRCUIT |
| 22 | EQUALIZATION SIGNAL PROCESSING CIRCUIT |
| 23 | FILTER GROUP |
| 24 | FILTER |
| 25 | COEFFICIENT UPDATING MEANS |
| 100 | OPTICAL FIBER COMMUNICATION SYSTEM |
| 110 | OPTICAL TRANSMITTER |
| 130 | TRANSMISSION PATH |
| 150 | OPTICAL RECEIVER |
| 111 | ENCODING UNIT |
| 112 | PRE-EQUALIZING UNIT |
| 113 | DAC |
| 114 | OPTICAL MODULATOR |
| 115 | LD |
| 132 | OPTICAL FIBER |
| 133 | OPTICAL AMPLIFIER |
| 151 | LD |
| 152 | COHERENT RECEIVER |
| 153 | ADC |
| 154 | EQUALIZING UNIT |
| 155 | DECODING UNIT |
| 171 | IN-RECEIVER DISTORTION COMPENSATING FILTER |
| 172 | CHROMATIC DISPERSION COMPENSATING FILTER |
| 173 | POLARIZATION DEMULTIPLEXING FILTER |
| 174 | CARRIER PHASE COMPENSATING FILTER |
| 175 | IN-TRANSMITTER DISTORTION COMPENSATING FILTER |
| 176 | LOSS FUNCTION CALCULATING UNIT |
| 177 | COEFFICIENT UPDATING UNIT |
| 178 | PLL |

**EP 4 482 058 A1**

**Claims**

1. An equalization signal processing circuit comprising:

   a filter group including a plurality of filters being connected in series along a signal path of a reception signal being acquired by coherent-receiving a signal being transmitted from a transmitter via a transmission path; and coefficient updating means for adaptively controlling filter coefficients of at least some filters of the plurality of filters, by using an error back propagation method, based on a difference between an output signal being output from the filter group and a predetermined value of the output signal,
   wherein, among the plurality of filters included in the filter group, at least some of one or more filters before a final stage filter convolve the filter coefficients with respect to an input signal vector, and output a calculation result of the convolution and a calculation result of the convolution that is acquired by calculation at a previous time, to a filter in a following stage.

2. The equalization signal processing circuit according to claim 1, wherein the coefficient updating means controls the coefficients by calculating gradients with respect to the filter coefficients in such a way as to minimize magnitude of the difference, and updates the filter coefficients by using a sum of gradients with respect to the coefficients at a previous time as a gradient with respect to a coefficient at a current time in reverse calculation for at least some filters of the one or more filters.

3. The equalization signal processing circuit according to claim 1 or 2, wherein at least some of the one or more filters include one or more delay elements that delay the calculation result of the convolution.

4. The equalization signal processing circuit according to claim 3, wherein at least some of the one or more filters include a plurality of the delay elements, and the plurality of delay elements are connected to one another in series.

5. The equalization signal processing circuit according to any one of claims 1 to 4, wherein the filter group includes at least one of an in-receiver distortion compensating filter, a chromatic dispersion compensating filter, a polarization demultiplexing filter, a carrier phase compensating filter, and an in-transmitter distortion compensating filter.

6. A receiver comprising:

   a receiving circuit configured to coherent-receive a signal being transmitted from a transmitter via a transmission path; and
   an equalization signal processing circuit configured to perform equalization signal processing with respect to the reception signal being coherent-received, wherein
   the equalization signal processing circuit includes:

   a filter group including a plurality of filters being connected in series along a signal path of the reception signal; and
   coefficient updating means for adaptively controlling filter coefficients of at least some filters of the plurality of filters, by using an error back propagation method, based on a difference between an output signal being output from the filter group and a predetermined value of the output signal, and,

   among the plurality of filters included in the filter group, at least some of one or more filters before a final stage filter convolve the filter coefficients with respect to an input signal vector, and output a calculation result of the convolution and a calculation result of the convolution that is acquired by calculation at a previous time, to a filter in a following stage.

7. The receiver according to claim 6, wherein the coefficient updating means controls the coefficients by calculating gradients with respect to the filter coefficients in such a way as to minimize magnitude of the difference, and updates the filter coefficients by using a sum of gradients with respect to the coefficients at a previous time as a gradient with respect to a coefficient at a current time in reverse calculation for an intermediate filter.

8. The receiver according to claim 6 or 7, wherein at least some of the one or more filters include one or more delay elements that delay the calculation result of the convolution.

9. The receiver according to claim 8, wherein at least some of the one or more filters include a plurality of the delay elements, and the plurality of delay elements are connected to one another in series.

10. The receiver according to any one of claims 6 to 9, wherein the filter group includes at least one of an in-receiver distortion compensating filter, a chromatic dispersion compensating filter, a polarization demultiplexing filter, a carrier phase compensating filter, and an in-transmitter distortion compensating filter.

11. A communication system comprising:

a transmitter configured to transmit a signal via a transmission path; and
a receiver configured to receive the signal being transmitted, wherein
the receiver includes:

a receiving circuit configured to coherent-receive a signal being transmitted from the transmitter; and
an equalization signal processing circuit configured to perform equalization signal processing with respect to the reception signal being coherent-received,

the equalization signal processing circuit includes:

a filter group including a plurality of filters being connected in series along a signal path of the reception signal; and
coefficient updating means for adaptively controlling filter coefficients of at least some filters of the plurality of filters, by using an error back propagation method, based on a difference between an output signal being output from the filter group and a predetermined value of the output signal, and,

among the plurality of filters included in the filter group, at least some of one or more filters before a final stage filter convolve the filter coefficients with respect to an input signal vector, and output a calculation result of the convolution and a calculation result of the convolution that is acquired by calculation at a previous time, to a filter in a following stage.

12. The communication system according to claim 11, wherein the coefficient updating means controls the coefficients by calculating gradients with respect to the filter coefficients in such a way as to minimize magnitude of the difference, and updates the filter coefficients by using a sum of gradients with respect to coefficients at a previous time as a gradient with respect to a coefficient at a current time in reverse calculation for an intermediate filter.

13. An equalization signal processing method comprising:

performing equalization signal processing with respect to a reception signal by using a filter group including a plurality of filters being connected in series along a signal path of the reception signal being coherent-received;
adaptively controlling filter coefficients of at least some filters of the plurality of filters, by using an error back propagation method, based on a difference between an output signal being output from the filter group and a predetermined value of the output signal; and
convolving the filter coefficients with respect to an input signal vector by at least some of one or more filters before a final stage filter among the plurality of filters included in the filter group, and outputting, to a filter in a following stage, a calculation result of the convolution and a calculation result of the convolution that is acquired by calculation at a previous time.

14. A non-transitory computer readable medium configured to store a program for causing a processor to execute processing of:

performing equalization signal processing with respect to a reception signal by using a filter group including a plurality of filters being connected in series along a signal path of the reception signal being coherent-received;
adaptively controlling filter coefficients of at least some filters of the plurality of filters, by using an error back propagation method, based on a difference between an output signal being output from the filter group and a predetermined value of the output signal; and
convolving the filter coefficients with respect to an input signal vector by at least some of one or more filters before a final stage filter among the plurality of filters included in the filter group, and outputting, to a filter in a following stage, a calculation result of the convolution and a calculation result of the convolution that is acquired by calculation at a previous time.

<u>10</u>

11                    13                    15

| OPTICAL TRANSMITTER | OPTICAL TRANSMISSION PATH | OPTICAL RECEIVER |
|---|---|---|

# Fig. 1

15

OPTICAL RECEIVER

22

EQUALIZATION SIGNAL
PROCESSING CIRCUIT

25

COEFFICIENT UPDATING MEANS

21

RECEIVING
CIRCUIT

24    24    24    23

FILTER    FILTER    ...    FILTER

FILTER GROUP

Fig. 2

110

100

OPTICAL TRANSMITTER

111

112

113

| ENCODING UNIT | PRE-EQUALIZING UNIT | DAC |

115

114

| LD | OPTICAL MODULATOR |

130

TRANSMISSION PATH

133

132    132

TRANSMISSION DATA

150

OPTICAL RECEIVER

152    153    154    155

| COHERENT RECEIVER | ADC | EQUALIZING UNIT | DECODING UNIT |

151

LD

Fig. 3

Fig. 4

TIME

$u^{[1]}[k-1]$

$u^{[0]}[k]$

$u^{[2]}[k]$

$u^{[1]}[k]$

CONVOLUTION

CONVOLUTION

Fig. 5

$u^{[0]}[k]$ ── $h^{[1]}[0]$ ──⊕── $u^{[1]}[k;k]$

$u^{[0]}[k-1]$ ── $h^{[1]}[1]$ ──⊕

$z^{-1}$ $u^{[1]}[k-1;k-1]$

$u^{[0]}[k-2]$ ── $h^{[1]}[2]$

$z^{-1}$ $u^{[1]}[k-2;k-2]$

Fig. 6

CD           CD+TxIQskew       CD+RxIQskew

Exact

Approrox.

Fig. 7

154

EQUALIZING UNIT     410

PROCESSOR

420

MEMORY

Fig. 8

501

502

503

$x_1$ —— CHROMATIC DISPERSION COMPENSATION — POLARIZATION DEMULTIPLEXING — CARRIER PHASE COMPENSATION —— $y_1$

$x_2$ ——                                                                                                        —— $y_2$

COEFFICIENT UPDATING UNIT          PLL

510          520

Fig. 9

600

510

COEFFICIENT
UPDATING UNIT

601

$h_{11}$

$h_{12}$

$h_{21}$

$h_{22}$

Fig. 10

Fig. 11

Fig. 12

TIME

$u^{[0]}[k]$

$u^{[1]}[k]$

$u^{[2]}[k]$

CONVOLUTION

CONVOLUTION

Fig. 13

TIME

$u^{[0]}[k+1]$

$u^{[1]}[k+1]$

$u^{[2]}[k+1]$

CONVOLUTION

CONVOLUTION

Fig. 14

<table>
<tr><td colspan="2">**INTERNATIONAL SEARCH REPORT**</td><td colspan="2">International application No.<br>**PCT/JP2022/005581**</td></tr>
</table>

**A.  CLASSIFICATION OF SUBJECT MATTER**

*H04B 10/2507*(2013.01)i; *H04B 3/04*(2006.01)i; *H04B 10/61*(2013.01)i
FI:   H04B10/2507; H04B3/04 A; H04B10/61

According to International Patent Classification (IPC) or to both national classification and IPC

**B.  FIELDS SEARCHED**

Minimum documentation searched (classification system followed by classification symbols)

H04B10/2507; H04B3/04; H04B10/61

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| A | WO 2021/210259 A1 (NEC CORP.) 21 October 2021 (2021-10-21)<br>paragraphs [0045]-[0100], fig. 6 | 1-14 |
| A | ARIKAWA, Manabu et al. Adaptive multi-layer filters incorporated with Volterra filters for impairment compensation including transmitter and receiver nonlinearity. Optics Express [online], 30 August 2021, vol. 29, issue 18, pp. 28366-28387, [retrieved on 20 April 2022], Internet<URL:https://doi.org/10.1364/OE.435161><br>pp. 28366-28387 | 1-14 |
| A | ARIKAWA, Manabu et al. Transmitter and receiver impairment monitoring using adaptive multi-layer linear and widely linear filter coefficients controlled by stochastic gradient descent. Optics Express [online], 12 April 2021, vol. 29, issue 8, pp. 11548-11561, [retrieved on 20 April 2022], Internet<URL:https://doi.org/10.1364/OE.416992><br>pp. 11548-11561 | 1-14 |
| T | SATO, Masaki et al. Mitigation of Transmitter Impairment with 4×2 WL MIMO Equalizer Embedding Preliminary CPR, 2022 Optical Fiber Communications Conference and Exhibition (OFC), 06 March 2022, pp. 1-3<br>pp. 1-3 | 1-14 |

☐ Further documents are listed in the continuation of Box C.      ☑ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **20 April 2022** | **10 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/005581**

| Patent document cited in search report | Publication date (day/month/year) | Patent family member(s) | Publication date (day/month/year) |
|---|---|---|---|
| WO 2021/210259 A1 | 21 October 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. J. SAVORY**. Digital filters for coherent optical receivers. *Opt. Express*, 2008, vol. 16 (2), 804
- **M. ARIKAWA** ; **K. HAYASHI**. Adaptive equalization of transmitter and receiver IQ skew by multi-layer linear and widely linear filters with deep unfolding. *Opt. Express*, 2020, vol. 28 (16), 23478
- **M. ARIKAWA** ; **K. HAYASHI**. Adaptive multi-layer filters incorporated with Volterra filters for impairment compensation including transmitter and receiver nonlinearity. *Opt. Express*, 2021, vol. 29 (18), 28366
- **B. I. BITACHON et al.** Deep learning based digital backpropagation demonstrating SNR gain at low complexity in a 1200 km transmission link. *Opt. Express*, 2020, vol. 28 (20), 29318